# EUROPÄISCHE PATENTSCHRIFT

(11) **EP 2 130 662 B1**
(45) Veröffentlichungstag und Bekanntmachung des Hinweises auf die Patenterteilung: **12.07.2017**
(21) Anmeldenummer: 09160977.6
(22) Anmeldetag: 25.05.2009
(51) Int. Cl.: B29C 47/88, B29C 47/90, B29C 47/92, B29C 47/20

(54) **Verfahren zur Herstellung von Kunststoffprofilen**
Method for producing plastic profiles
Procédé destiné à la fabrication de profils en plastique

(30) Priorität: 04.06.2008 DE 102008026682
(43) Veröffentlichungstag der Anmeldung: 09.12.2009
(73) Patentinhaber: battenfeld-cincinnati Germany GmbH, 32547 Bad Oeynhausen (DE)
(72) Erfinder: Dohmann, Heinrich, 37671 Höxter (DE); Gesper, Thomas, 3333 Gütersloh (DE); Seibel, Stefan, Dr. Ing., 33178 Kirchborchen (DE)

(56) Entgegenhaltungen:
- WO-A1-90/02644
- WO-A1-97/06940
- WO-A1-97/10941
- WO-A1-2004/089605
- DE-A1- 10 140 143
- DE-A1-102004 052 972
- GB-A- 1 145 762
- US-B2- 6 905 642

## Beschreibung

Die Erfindung betrifft ein Verfahren zur Herstellung von Kunststoffprofilen mit einem Extruder, einem sich in Produktionsrichtung an den Extruder anschließenden Rohrkopf und einer Kalibrierstation, in der das Kunststoffprofil an die Innenwandung eines Kalibrierwerkzeuges anlegbar ist.

Bei den heute bekannten Kalibriersystemen wird in einer Kalibriervorrichtung durch Anlegen von einem Vakuum das zu kalibrierende Kunststoffrohr an die Innenwandung des Kalibrierwerkzeuges gesaugt. Hierbei sind diverse Probleme zu überwinden, deren Lösung meist komplizierte Vorrichtungen zur Folge haben. Durch das anliegende Vakuum ist eine ausreichende Abdichtung der Kalibrierstation gegenüber dem Umgebungsdruck erforderlich, was sowohl zu einer problematischen Einlauf- als auch einer Auslasssituation führt, da dieses Vakuumsystem mindestens an zwei Seiten offen sein muss, da das zu kalibrierende Rohr auf der einen Seite hinein und auf der anderen Seite hinaus geführt wird.

Im Stand der Technik gibt es hinreichende Offenbarungen von Rohrextrusionsanlagen bei denen vorgeschlagen wird eine Kalibrierung über anlegen eines Druckes im Inneren des Rohres zu kalibrieren. So schlagen zum Beispiel die WO 90/02644 A1, die WO 2004/089605 A1 und die WO 97/06940 A1 vor einen dehnbaren Stopfen hydraulisch oder pneumatisch mit Druck zu beaufschlagen, um das Rohr gegen eine Kalibrierwandung zu drücken. Aus der WO 97/10941 A1 und der GB 1 145 762 A sind Methoden der Außenkühlung des Rohres bekannt.

Aufgabe der vorliegenden Erfindung ist es daher, ein Kalibriersystem anzubieten, mittels dem diese Probleme überwunden werden bzw. überhaupt nicht auftreten können und damit die Vorrichtung einfacher baut.

Die Lösung der Aufgabe ist in Verbindung mit dem Oberbegriff des Anspruches 1 dadurch gekennzeichnet, dass das Kunststoffprofil, während es das Kalibrierwerkzeug, bestehend aus mindestens einer Hülse und einem Balg, durchläuft, im Bereich des Kalibrierwerkzeuges mit Überdruck beaufschlagt wird, wobei der Überdruck mittels eines flexiblen und kühlbaren Balges im Inneren des Kunststoffprofils erzeugt wird, wobei zum Aufbau des Überdruckes im Kunststoffprofil der flexible Balg im Inneren des Kunststoffprofils soweit mit einem Fluid gefüllt wird, dass der erforderliche Überdruck in einem inneren Teilbereich des Kunststoffprofils erzeugt werden kann, wobei mindestens im Bereich mit Überdruck das Kunststoffprofil von innen zusätzlich gekühlt wird, wobei das Kalibrierwerkzeug im Querschnitt, insbesondere im Durchmesser, veränderbar ist, wobei das Kalibrierwerkzeug in Abhängigkeit des Massespaltes des Rohrkopfes oder umgekehrt verändert wird.

Dieser Balg dehnt sich analog eines Luftballons gezielt aus, die Materialbeschaffenheit des flexiblen Balgs kann so gewählt werden, dass Teilbereiche des Balgs stärker als andere Bereiche gedehnt werden können und somit definiert nicht nur ein Kreisring, sondern auch ovale oder sonstige Profile abgebildet werden. Weiterhin bietet dieser flexible Balg die Möglichkeit, einerseits ihn selbst als auch die Innenseite des zu kalibrierenden Profils zu kühlen. Die Kunststoffmasse wird gegen das Kalibrierwerkzeug gepresst und somit definiert an diese angelegt.

Der flexible Balg dichtet somit einen Innenbereich des zu kalibrierenden Rohres zwischen dem Balg und dem Rohrkopf ab, so dass dieser mit Überdruck beaufschlagt werden kann. Hierdurch wird erreicht, dass der Bereich zwischen Rohrkopf und Kalibrierwerkzeug weiter im Durchmesser als die Kalibrierhülse selbst aufgeweitet werden kann, wodurch sichergestellt wird, dass die Kunststoffmasse an der Innenwandung des Kalibrierwerkzeuges anliegt.

Hierbei ist es ohne weiteres denkbar, das Kühlmedium gleichzeitig zum Aufweiten des flexiblen Balgs zu verwenden. Dies kann beispielsweise dadurch gelöst werden, dass ein Fluid, flüssig oder gasförmig, kalt oder warm, entlang eines Trägerrohres durch den Rohrkopf bis in den flexiblen Balg geleitet wird, diesen auf den nötigen Umfang erweitert und dann gezielt über im Balg eingebrachte Ventile das Fluid in den gewünschten Überdruckbereich entweichen lässt. Je nach gewähltem Fluid wird der flexible Balg selbst als auch das Innere des Kunststoffprofiles gekühlt.

Das vorgeschlagene Verfahren eignet sich auch für Extruderlinien, bei denen unterschiedliche Profildurchmesser gefahren werden, so dass weiterbildungsgemäß vorgesehen ist, dass das Kalibrierwerkzeug im Querschnitt, insbesondere im Durchmesser, veränderbar ist. Durch den Einsatz des flexiblen Balgs ist keine Umrüstung erforderlich, da dieser auch bei verändertem Querschnitt ausreichend weit aufgedehnt werden kann.

Durch die Änderung des Kalibrierwerkzeuges in Abhängigkeit des Massespaltes kann mit der Verstellung nur eines Parameters alle weiteren davon abhängigen Aggregate in der Extrusionslinie verändert werden.

Es ist also weiterbildungsgemäß vorgesehen, dass das Fluid zunächst in das Innere des Balges gelangt und von diesem in den zu kühlenden Bereich des Kunststoffprofils eingebracht wird. Insbesondere bei der Verwendung von flüssigen Medien wird vorgeschlagen, dass das Fluid mit einem Ausgleichsbehälter in Verbindung steht, um bei plötzlich auftretenden Formänderungen des flexiblen Balges den vorherrschenden Druck schnellstmöglich abbauen bzw. kompensieren zu können.

Fortbildungsgemäß ist vorgesehen, dass der Balg in seiner axialen Position relativ zum Kalibrierwerkzeug veränderbar ist. Hierdurch wird erreicht, den Bereich mit vorherrschendem Überdruck im Inneren des zu kalibrierenden Rohres gezielt zu wählen. Der Bereich kann somit nur vor dem Kalibrierwerkzeug, innerhalb des Kalibrierwerkzeuges liegen oder auch den Bereich des Kalibrierwerkzeuges mit einschließen, aber auch in Extrusionsrichtung betrachtet, sich hinter dem Kalibrierwerkzeug befinden.

In den Zeichnungen ist schematisch ein Ausführungsbeispiel der Erfindung wiedergegeben.
- Fig. 1: zeigt eine Extruderlinie und
- Fig. 2: den Bereich der Kalibrierung im Detail,
- Fig. 3: eine Alternative zu Fig. 2.

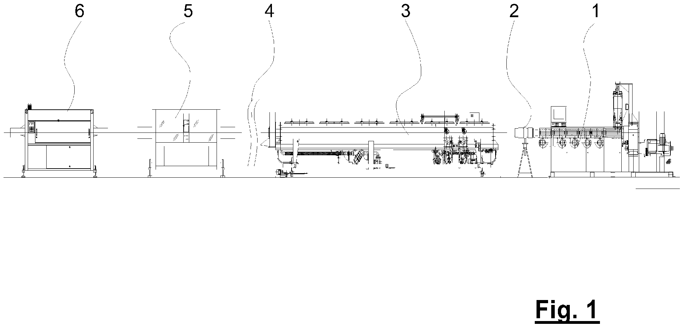

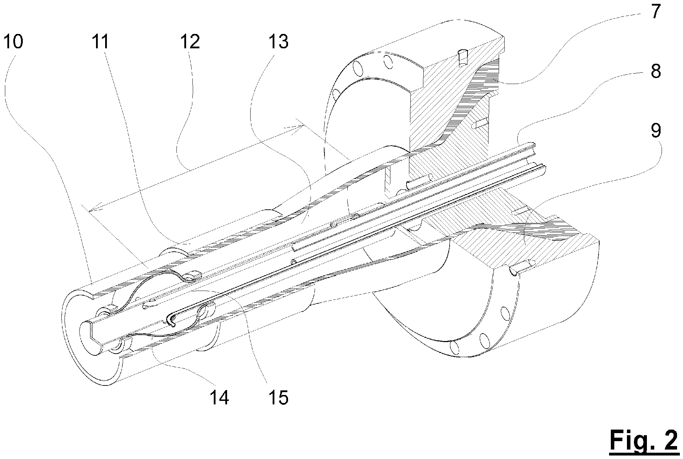

In der Figur 1 ist eine Extruderlinie mit einem herkömmlichen Extruder 1 und einem sich anschließenden Werkzeug 2, in der Regel in Form eines Rohrkopfes, vorteilhafterweise auch mit verstellbarem Massespalt, gezeigt. Daran schließt sich eine Kalibrierstation 3 an. An diese Kalibrierstation 3 können sich weitere Nachfolgeeinrichtungen 4 wie weitere Sprühkalibrierstationen sowie Abzug 5, und Säge 6 etc. anschließen. Der Bereich der Kalibrierung ist in Figur 2 verdeutlicht dargestellt.

Figur 2 zeigt einen Teil der Kalibrierstation 3 im Längsschnitt, wobei wiederum die Wandungen des hier beispielhaft dargestellten Kunststoffprofils 10 in Form eines Rohres zu sehen sind. Innerhalb der Kalibrierstation 3 ist ein Kalibrierwerkzeug 11, hier in Form einer im Durchmesser verstellbaren Kalibrierhülse, schematisch dargestellt. Das noch pastöse vorgeformte Kunststoffrohr 7 gelangt vom Werkzeug 2 über den Rohrkopf und die Düse 9 in diese Kalibrierhülse 11. Damit dieses ohne Verwendung eines üblichen Vakuums an die Innenwandung des Kalibrierwerkzeuges 11, sprich der Kalibrierhülse, zur exakten Durchmesserdefinierung gepresst wird, wird im Inneren des Rohres 10 ein Überdruck erzeugt. Um diesen Überdruck zu erzeugen ist im Inneren des Rohres 10 ein Stopfen 14 angeordnet, welcher hier durch einen flexiblen Balg 14 realisiert wird. Dieser flexible Balg 14 kann durch Aufblasen oder durch Füllen mit einem Fluid auf die unterschiedlichen Rohrdurchmesser aufgeweitet werden und somit ein Entweichen des Druckes verhindert werden. Durch diesen Überdruck wird das Profil 10 an die Innenwandung der Kalibrierhülse 11 gedrückt. Es ist auch möglich, einen Stopfen in Form eines Schleppdornes mit einer Kette oder ähnlichem in seiner Position im Rohrinneren zu halten. Innerhalb der Kalibrierstation, besonders im Bereich der Kalibrierhülse 11, ist eine Außenkühlung vorgesehen, die in Form von nicht dargestellten Wassersprühdüsen realisierbar ist. Auch die Verwendung eines Vollbades ist denkbar. In dem Bereich 13, in dem der Überdruck im Inneren des Rohres erzeugt wird, also zwischen dem Rohrkopf 9 und dem flexiblen Balg 14, ist vorgesehen, zusätzlich eine Innenkühlung anzubringen. Dies wird hier beispielsweise in Form von in diesen Bereich hineinragenden Hohlprofilen mit entsprechenden Sprühöffnungen ermöglicht. Um eine entsprechende Zirkulation im Inneren des Profils zu realisieren ist vorgesehen, an einem anderen Punkt innerhalb des Rohres die Flüssigkeit oder den Wasserdampf wieder abzusaugen und somit einen Kühlkreislauf zu ermöglichen.

Bevorzugt wird die dargestellte Ausführungsform, bei der der flexible Balg 14 über Fluidleitungen 15 versorgt wird. Über diese Fluidleitungen 15 wird der flexible Balg so weit aufgeweitet, dass das Innere des Profiles abgedichtet wird und der Raum 13 zwischen dem Balg 14 und der Düse 9 des Werkzeuges 2 mit Überdruck beaufschlagt werden kann, um das Kunststoffmaterial an die Innenwandungen des Kalibrierwerkzeuges 11 zu pressen. Der flexible Balg 14, der auf einem Trägerrohr 8 angeordnet ist, kann über dieses in Gänze in axialer Richtung verschoben werden, so dass die axiale Position 12 des Balges relativ zur Düse 9 veränderbar ist. Hierdurch wird erreicht, dass der Raum 13 den Bereich der Kalibrierhülse 11 mit beinhaltet oder nicht.

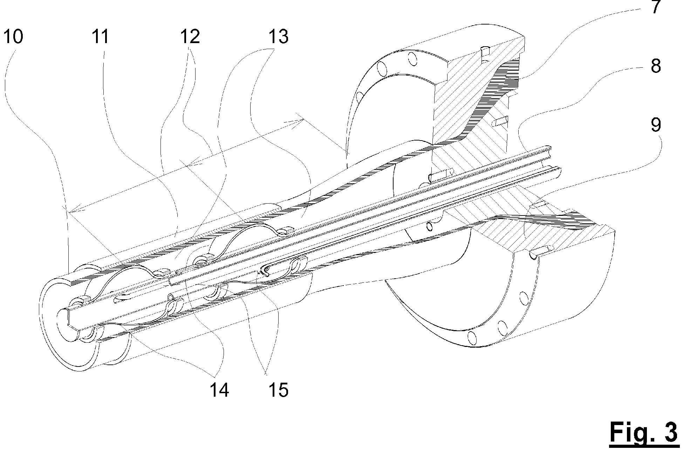

Figur 3 entspricht im Wesentlichen der Ausführungsform der Figur 2, wobei hier zusätzlich ein weiterer flexibler Balg 14 angeordnet ist. Auch dieser weitere Balg kann mittels der Fluidleitung 15 aufgeweitet werden. Durch diese Doppelanordnung von zwei flexiblen Bälgen werden somit zwei mit Überdruck beaufschlagbare Räume 13 geschaffen. Es kann somit gezielt nur der Raum zwischen den beiden flexiblen Bälgen 14 mit Überdruck beaufschlagt werden oder auch der Raum 13 zwischen der Düse 9 und dem ersten Balg 14 oder auch beide Räume. Auch hier ist wiederum vorgesehen, über das Trägerrohr 8, an dem die beiden flexiblen Bälge 14 angeordnet sind, die axiale Position der Bälge 14 relativ zur Düse 9 zu verändern.

Besonders praktisch ist es, wenn alle zu verstellenden Parameter wie Durchmesser des zu extrudierenden Rohres und damit der Kalibrierung und in Folge die Aufweitung des flexiblen Balges über eine geeignete Steuerung automatisch gesteuert oder geregelt werden. Dies gilt natürlich analog für weitere hier nicht erwähnte Parameter.

Im Bedarfsfall ist es auch denkbar, zur Intensivierung der Kühlung das gesamte Becken, in dem sich die Kalibrierung befindet, zu fluten und somit eine Außenkühlung umzusetzen.

Zum Schutz des flexiblen Balgs wird vorgeschlagen, diesen mit einem gewickeltem Rohr, wie es aus der DE 10 2004 052 972 bekannt ist, zu umgeben. Der Balg weitet dann das Rohr auf, welches wiederum die Kunststoffmasse gegen die Innenwandung der Kalibrierung drückt. Der flexible Balg ist so gegen Verschleiß und Hitze geschützt.

### Bezugszeichenliste:

- 1: Extruder
- 2: Werkzeug
- 3: Kalibrierstation
- 4: diverse Nachfolgeeinrichtungen
- 5: Abzug
- 6: Säge
- 7: extrudierte Kunststoffmasse
- 8: Trägerrohr
- 9: Düse von 2
- 10: Profil
- 11: Kalibrierhülse
- 12: axiale Position von 14
- 13: Raum zwischen 9 und 14
- 14: flexibler Balg
- 15: Fluidleitung

## Patentansprüche

1. Verfahren zur Herstellung von Kunststoffprofilen (10) mit
einem Extruder (1),
einem sich in Produktionsrichtung an den Extruder (1) anschließenden Rohrkopf (2) und
einer Kalibrierstation (3), in der das Kunststoffprofil (10) an die Innenwandung eines Kalibrierwerkzeuges (11) anlegbar ist,
das Kunststoffprofil (10), während es das Kalibrierwerkzeug bestehend aus mindestens einer Kalibrierhülse (11) und einem flexiblen und kühlbaren Balg (14), durchläuft, im Bereich des Kalibrierwerkzeuges mit Überdruck beaufschlagt wird,
wobei der Überdruck mittels des flexiblen und kühlbaren
Balges (14) im Inneren des Kunststoffprofils (10) erzeugt wird, wobei zum Aufbau des Überdruckes im Kunststoffprofil (10) der flexible Balg (14) im Inneren des Kunststoffprofils (10) soweit mit einem Fluid gefüllt wird, dass der erforderliche Überdruck in einem inneren Teilbereich des Kunststoffprofils (10) erzeugt werden kann, **dadurch gekennzeichnet, dass** mindestens im Bereich (13), in dem der Überdruck im Inneren des Kunststoffprofils (10) erzeugt wird, also zwischen dem Rohrkopf (9) und dem flexiblen und kühlbaren Balg (14), eine zusätzliche Innenkühlung vorgesehen ist, wobei das Kalibrierwerkzeug im Querschnitt, insbesondere im Durchmesser, veränderbar ist,
wobei das Kalibrierwerkzeug in Abhängigkeit des Massespaltes des Rohrkopfes (2) oder umgekehrt mit Hilfe einer Steuerung verändert wird.

2. Verfahren nach Anspruch 1, **dadurch gekennzeichnet, dass** das Fluid zunächst in das Innere des Balges (14) gelangt und von diesem in den zu kühlenden Bereich (13) des Kunststoffprofils (10) eingebracht wird.

3. Verfahren nach mindestens einem der vorigen Ansprüche, **dadurch gekennzeichnet, dass** das Fluid mit einem Ausgleichsbehälter in Verbindung steht.

4. Verfahren nach mindestens einem der vorigen Ansprüche, **dadurch gekennzeichnet, dass** der Balg (14) in seiner axialen Position relativ zum Kalibrierwerkzeug veränderbar ist.

## Claims

1. Method for the production of plastic profiles (10) using an extruder (1),
a pipehead (2) arranged downstream of the extruder (1) in the direction of production,
and a calibrating station (3) in which the plastic profile (10) is adjustable to the inner surface of a calibration device (11),
the plastic profile (10), while being driven through the calibration device comprising at least one calibration sleeve (11) and a flexible and coolable bellow (14), being set under overpressure in the area of the calibration device,
the overpressure being created by means of the flexible and coolable bellow (14) inside the plastic profile (10), for which the flexible bellow (14) inside the plastic profile (10) is filled with a fluid to such extent that the necessary overpressure can be created in a section of the plastic profile,
**characterized in that** an additional inner cooling is provided at least throughout the section (13), in which the overpressure is created inside the plastic profile (10), that is between the pipehead (9) and the flexible and coolable bellow (14),
the cross section of the calibration device, especially the diameter, being modifiable,
the calibration device being adjusted in dependence of the measuring gap of the pipehead (2) or vice versa by means of a control system.

2. Method according to claim 1, **characterized in that** the fluid is first inserted into the interior of the bellow (14) and is driven from there into the section (13) of the plastic profile (10) to be cooled.

3. Method according to at least one of the preceding claims, **characterized in that** the fluid is linked with a compensation tank.

4. Method according to at least one of the preceding claims, **characterized in that** the bellow (14) is axially displaceable relative to the calibration device.

## Revendications

1. Procédé pour la production de tubes en plastique (10) au moyen d'un extrudeur (1),
une tête tubulaire (2) qui y fait suite dans le sens de la production
et une station de calibration (3) dans laquelle le profile en plastique (10) peut être appliqué à la surface intérieure de l'outil d'un calibrage (11),
le tube en plastique (10) étant mis sous surpression dans la zone de l'outil de calibrage (11) pendant que ledit tube en plastique (10) est conduit à travers l'outil de calibrage comprenant au moins une douille de calibrage (11) et un soufflet (14) flexible et refroidissable,
la surpression étant créée au moyen du soufflet (14) flexible et refroidissable à l'intérieur du profile en plastique (10), procédé pour lequel le soufflet (14) à l'intérieur du profile en plastique (10) est rempli par un fluide de façon telle que la surpression nécessaire puisse être créée dans une partie du tube en plastique (10),
**caractérisé en ce qu'**un refroidissement interne supplémentaire est prévu au moins pour la partie (13) dans laquelle la surpression est créée à l'intérieur du tube en plastique (10), en d'autres termes entre la tête tubulaire (2) et le soufflet (14) flexible et refroidissable,
la section de outil de calibrage, surtout le diamètre, pouvant être ajusté,
l'outil de calibrage étant ajusté en fonction de la fente de mesure de la tête tubulaire (2) ou inversement au moyen d'un système de contrôle.

2. Procédé selon revendication 1, **caractérisé en ce qu'**un fluide est d'abord inséré dans l'intérieur du soufflet (14) et de là est mené dans la partie (13) du profile en plastique (10) à refroidir.

3. Procédé selon au moins une quelconque des revendications précédentes, **caractérisé en ce que** le fluide est lié à un réservoir de compensation.

4. Procédé selon au moins une quelconque des revendications précédentes, **caractérisé en ce que** le soufflet (14) peut être axialement ajusté par rapport à l'outil de calibrage.
